# FASCICULE DE BREVET EUROPEEN

(11) **EP 1 588 912 B1**
(45) Date de publication et mention de la délivrance du brevet: **02.05.2007**
(21) Numéro de dépôt: 05290637.7
(22) Date de dépôt: 23.03.2005
(51) Int. Cl.: B60T 8/00

(54) **Procédé de freinage d'un aéronef à plusieurs roues freinées**
Verfahren zum Abbremsen eines Flugzeuges mit mehreren gebremsten Rädern
Braking method for an aircraft with multiple braking wheels

(30) Priorité: 19.04.2004 FR 0404093
(43) Date de publication de la demande: 26.10.2005
(73) Titulaire: MESSIER-BUGATTI, 78140 Velizy Villacoublay (FR)
(72) Inventeur: Frank, David, 75013 Paris (FR)
(74) Mandataire: Parzy, Benjamin Alain

(56) Documents cités:
- EP-A- 0 329 373
- GB-A- 2 311 108
- US-A- 5 172 960
- US-A- 5 217 282
- US-A- 5 417 477
- US-A1- 2004 065 776

## Description

L'invention concerne un procédé de freinage d'un aéronef à plusieurs roues freinées.

### ARRIERE-PLAN DE L'INVENTION

Le rapport entre l'effort de freinage développé par une roue freinée et la charge verticale qui s'exerce sur cette roue est représentatif du frottement qui s'exerce entre le pneumatique équipant la roue et la piste. Il est bien connu que la valeur de ce rapport dépend de divers paramètres comme l'état de la piste, le degré d'usure du pneumatique, ou encore la vitesse de l'aéronef. En outre, la valeur de ce rapport varie lors du freinage : avant de parvenir à une valeur stabilisée, ce rapport présente une bosse initiale de valeur supérieure à ladite valeur stabilisée.

Cette bosse initiale est très gênante dans la mesure où elle conduit à un effort de freinage transitoire d'intensité importante dont il faut tenir compte pour le dimensionnement de l'atterrisseur et de la structure de l'aéronef. Cet effort de freinage transitoire peut en particulier être dimensionnant pour l'atterrisseur, pour la zone d'attache de l'atterrisseur sur la structure, ainsi que pour la partie de fuselage s'étendant entre les atterrisseurs principaux portant les roues freinées et l'atterrisseur auxiliaire.

On a proposé, pour éviter ces inconvénients, de programmer le calculateur de freinage de l'aéronef de telle sorte qu'il soit apte à limiter l'effort de freinage développé par chaque roue freinée à un niveau maximal prédéterminé. En pratique, ceci se révèle très délicat à mettre en oeuvre, car l'effort de freinage développé par une roue freinée donnée est très difficile à mesurer. Cette limitation doit donc être d'autant plus basse que les performances instantanées du frein sont difficiles à prédire, ce qui conduit à prendre des marges de sécurité qui limitent de façon importante les performances du frein.

On a également proposé d'appliquer l'effort de freinage de manière progressive, selon un gradient prédéterminé. Mais le caractère hautement non linéaire de la réponse du frein rend ce contrôle extrêmement incertain.

On a encore proposé d'inhiber le freinage sur un certain nombre de roues. Néanmoins, cette façon de procéder suppose une logique complexe. En effet, en cas de panne d'un frein qui n'est pas l'un des freins inhibés, il faut pouvoir rapidement détecter cette panne et activer l'un des freins inhibés en remplacement du frein défaillant, afin de conserver un niveau de freinage égal au niveau de freinage développé en l'absence de panne.

On connaît par ailleurs des protections anti-glissement qui, pour chacune des roues, modulent la consigne générale de freinage générée par le calculateur de freinage afin d'éviter que les roues ne se bloquent. Ainsi, bien que le freinage soit commandé simultanément pour toutes les roues, il se peut, si la protection anti-glissement est déclenchée, que l'effort transitoire d'un certain nombre de roues d'un atterrisseur intervienne avec un décalage dans le temps par rapport à l'effort transitoire des autres roues de l'atterrisseur, ce qui a pour effet de diminuer l'effort de freinage transitoire global subi par l'atterrisseur. Néanmoins, cette diminution est fortuite et présente un caractère aléatoire marqué, ce qui interdit de la prendre en compte pour le dimensionnement de l'atterrisseur.

L'arrière-plan technologique de l'invention est notamment illustré par les documents GB 2 311 108-A, qui représente l'art antérieur le plus proche, US 5 417 477, US 5 217 282, US 5 172 960, US 2004/065776-A1 ou encore EP 0 329 373-A.

### OBJET DE L'INVENTION

L'invention a pour objet un procédé de freinage avec les caractéristiques de la revendication 1 pour un aéronef comportant plusieurs roues pouvant être freinées de façon commandée, permettant de réduire à coup sûr l'effort maximal de freinage, tout en ne présentant pas les inconvénients de l'art antérieur.

### BREVE DESCRIPTION DE L'INVENTION

Selon l'invention, on propose un procédé de freinage d'un aéronef comportant plusieurs roues pouvant être freinées de façon commandée, qui comporte l'étape de commander le freinage d'un premier groupe de roues de l'aéronef, et, après un décalage temporel, de commander le freinage d'un deuxième groupe de roues de l'aéronef.

Le décalage temporel ainsi introduit entre les commandes de freinage garantit à coup sûr que l'effort transitoire généré par le freinage du deuxième groupe de roues freinées ne surviendra pas simultanément à l'effort transitoire généré par le freinage du premier groupe de roues freinées, ce qui a pour effet de diminuer l'effort de freinage transitoire subi par l'aéronef.

On parvient ainsi à diminuer les efforts vus par l'aéronef au moyen d'un procédé très simple à mettre en oeuvre, puisqu'il ne demande qu'une temporisation et qu'il ne nécessite aucune logique complexe.

Le procédé de l'invention reste en outre parfaitement compatible avec la mise en oeuvre de protections anti-glissement.

Selon un mode particulier de mise en oeuvre du procédé de l'invention appliqué à un aéronef à plusieurs atterrisseurs principaux portant les roues freinées, le premier groupe de roues est constitué par l'ensemble des roues portées par un premier groupe d'atterrisseurs, tandis que le deuxième groupe de roues est constitué par l'ensemble des roues portées par un deuxième groupe d'atterrisseurs.

De préférence alors, lorsque l'aéronef comporte des atterrisseurs principaux de voilure et au moins un atterrisseur principal de fuselage, l'un des groupes d'atterrisseurs est constitué par les atterrisseurs de voilure, tandis que l'autre des groupes d'atterrisseurs est constitué par le ou les atterrisseurs de fuselage.

Selon un autre mode de mise en oeuvre du procédé de l'invention, l'un des groupes de roues est constitué de roues portées par des atterrisseurs distincts.

De préférence alors, lorsque les roues freinées sont portées en diabolos à l'extrémité de deux atterrisseurs principaux, chaque diabolo comportant une roue interne et une roue externe, l'un des groupes de roues est constitué des roues externes des deux atterrisseurs, l'autre des groupes de roues étant constitué des roues internes des deux atterrisseurs.

Selon un autre mode de mise en oeuvre du procédé de l'invention appliqué à un aéronef comportant un atterrisseur à boggie articulé sur l'atterrisseur et portant au moins une paire de roues avant et une paire de roues arrière, la paire de roues avant et la paire de roues arrière font partie de deux groupes de roues distincts.

Avantageusement enfin, le décalage temporel est inférieur à une seconde.

### BREVE DESCRIPTION DES DESSINS

L'invention sera mieux comprise à la lumière de la description qui suit en référence aux figures des dessins annexés parmi lesquelles, :
- la figure 1 est une vue de face schématique d'un aéronef comportant deux atterrisseurs principaux de voilure portant chacun une paire de roues freinées en diabolo;
- la figure 2 est un graphique montrant l'évolution des efforts de freinage générés par chacun des groupes de roues freinées de l'aéronef illustré en figure 1;
- la figure 3 est une vue de dessus schématique d'un aéronef comportant deux atterrisseurs principaux de voilure et un atterrisseur principal de fuselage ;
- la figure 4 est une vue de côté schématique partielle d'un aéronef comportant des atterrisseurs principaux de voilure équipés d'un boggie, illustré au cours d'un atterrissage.

### DESCRIPTION DETAILLEE DE L'INVENTION

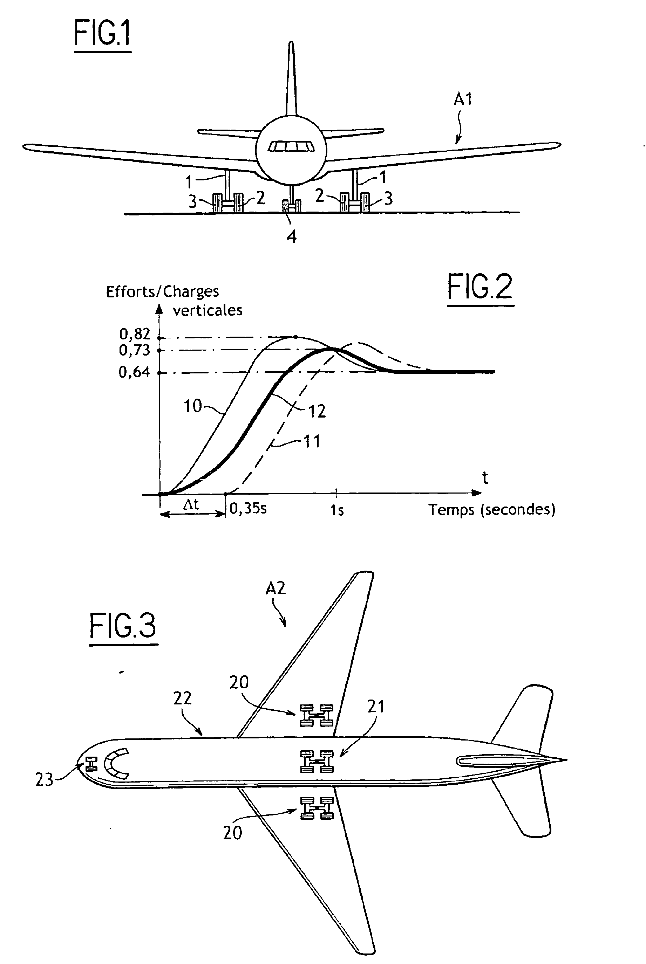

En référence à la figure 1, le procédé de l'invention est appliqué à un aéronef A1 (par exemple du type AIRBUS A320 ou BOEING 737) comportant deux atterrisseurs principaux 1 portant chacun, disposées en diabolo, une roue freinée interne 2 et une roue freinée externe 3.

L'aéronef est par ailleurs équipé d'un atterrisseur auxiliaire 4 équipé de roues non freinées.

Lors d'un freinage consécutif à un atterrissage, le procédé de l'invention consiste à commander le freinage d'un premier groupe de roues freinées, en l'espèce le groupe constitué des roues internes 2 des deux atterrisseurs principaux 1, puis, avec un décalage temporel, commander le freinage d'un deuxième groupe de roues freinées, en l'espèce le groupe constitué des roues externes 3 des deux atterrisseurs principaux 1.

Le freinage ainsi réalisé reste symétrique, et ne génère donc aucune déviation de trajectoire de l'aéronef.

Il est à noter que les pistes présentent en général une pente en dévers depuis l'axe de la piste jusqu'à ses bords latéraux d'environ 3%. Cette pente a pour conséquence d'augmenter la charge verticale des roues internes 2 par rapport à la charge verticale des roues externes 3. La capacité de freinage des roues internes 2 est donc légèrement supérieure à celle des roues externes 3. C'est pour cette raison qu'il a été ici choisi de freiner les roues internes 2 en premier lieu, de préférence aux roues externes 3.

Sur la figure 2, la courbe 10 (en trait continu) représente l'évolution dans le temps de la somme des efforts de freinage générés par les roues internes 2, rapportée à la somme des charges verticales desdites roues internes 2.

Comme cela est visible sur la figure 2, la courbe 10 présente une bosse transitoire, d'une valeur de 0,82, puis redescend en tendant vers une valeur stabilisée de 0,64.

La courbe 11 (en pointillés) est une courbe similaire à la courbe 10, mais relative au groupe des roues externes 3. La courbe 11 a la même forme que celle de la courbe 10, en étant décalée temporellement d'un décalage Δt, conformément à l'invention. Ici, ce décalage est de l'ordre de 0,35 seconde.

La courbe 12 (en trait fort) représente la résultante des efforts de freinage de toutes les roues freinées, rapportée à la résultante des charges verticales desdites roues freinées.

On constate que la courbe 12 présente une bosse initiale, mais qui n'est pas aussi importante que la bosse des courbes 10 et 11. La bosse de la courbe 12 a ici une valeur de 0,73, soit une baisse de 11% par rapport à la valeur de cette même bosse qui aurait été atteinte si toutes les roues avaient été freinées simultanément.

Les normes de certification des appareils commerciaux (JAR25, FAR25) imposent, en l'absence d'analyse rationnelle ou d'essais, de considérer une valeur maximale de l'effort de freinage sur une roue freinée égale à au moins 0,8 fois la charge verticale de ladite roue. On voit que le procédé de l'invention permet de gagner environ 9% par rapport à cet effort forfaitaire.

On pourrait penser que le fait de retarder le freinage d'une partie des roues augmente la distance de freinage de l'aéronef. Dans le cas d'un aéronef équipé d'une architecture hydraulique de freinage, cette affirmation est à relativiser. En effet, dans le mode de mise en oeuvre décrit ci-dessus, les freins sont sollicités par moitiés. A chaque sollicitation, le volume des cavités à remplir correspond donc à la moitié du volume total. A débit identique, le temps de réponse est donc sensiblement divisé par deux, et l'effort de freinage est appliqué plus rapidement. Cette diminution du temps de réponse compense très largement le décalage temporel introduit du fait de la mise en oeuvre du procédé de l'invention. La distance de freinage n'est donc globalement que très peu affectée.

Certains aéronefs (par exemple du type BOEING 747, AIRBUS A340-600 ou encore AIRBUS A380) comportent deux atterrisseurs principaux de voilure et un ou plusieurs atterrisseurs principaux de fuselage. L'aéronef A2 illustré à la figure 3 comporte ainsi deux atterrisseurs principal de voilure 20, et un atterrisseur principal de fuselage 21, chacun des atterrisseurs comportant ici quatre roues freinées. L'aéronef A2 comporte par ailleurs un atterrisseur auxiliaire 23.

La mise en oeuvre du procédé de l'invention consiste ici à commander le freinage des roues des atterrisseurs principaux de voilure 20 formant un premier groupe d'atterrisseurs, et, après un décalage temporel, à commander le freinage des roues de l'atterrisseur principal de fuselage 21 formant un deuxième groupe d'atterrisseurs.

Le freinage ainsi réalisé est symétrique, évitant toute déviation de la trajectoire de l'aéronef.

Le graphique de la figure 2 peut encore être utilisé pour l'illustration des effets du procédé de l'invention. Cette fois, la courbe 10 illustre l'effort de freinage du groupe constitué des atterrisseurs principaux de voilure 20 (rapporté à la somme des charges verticales des roues concernées), et la courbe 11 illustre l'effort de freinage du groupe constitué de l'atterrisseur principal de fuselage 21 (rapporté à la somme des charges verticales des roues concernées). L'effort de freinage total est illustré par la courbe 12.

On obtient là encore, une diminution de l'effort transitoire de freinage. Le moment de flexion de la partie de fuselage 22 s'étendant entre l'atterrisseur principal de fuselage 21 et l'atterrisseur auxiliaire 23 lors d'un freinage est proportionnel (à des effets d'inertie près) à l'effort de freinage illustré par la courbe 12. Ce moment de flexion est dimensionnant pour certains aéronefs au fuselage très long, comme par exemple l'AIRBUS A340-600. La diminution de l'effort de freinage selon l'invention permet donc un allégement de la structure de l'aéronef et aussi du train lui-même.

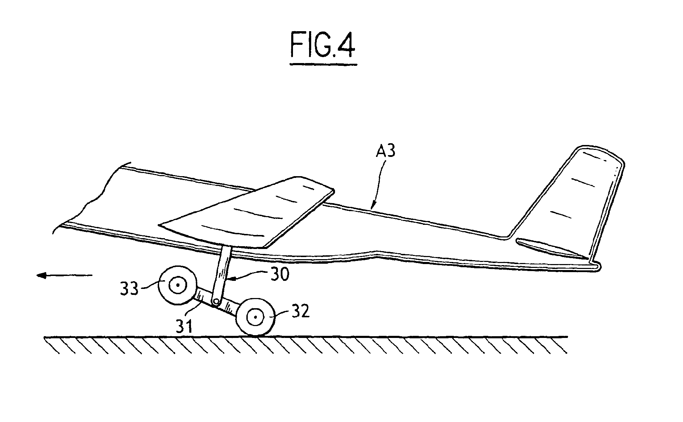

Selon un mode de mise en oeuvre particulier appliqué à un aéronef A3 illustré à la figure 4 dont les atterrisseurs principaux de voilure 30 comportent un boggie basculant 31 portant, par paires agencées en diabolos, des roues arrière 32 et des roues avant 33, on commande d'abord le freinage des roues arrière 32, puis, après un décalage temporel, on commande les freinage des roues avant 33.

Ainsi, on commande d'abord le freinage des roues qui impactent la piste en premier, en l'occurrence ici les roues arrière 32, dès leur contact avec la piste, ce qui permet de commencer à freiner alors que l'ensemble des roues portées par le boggie 31 n'est pas encore en contact avec le sol.

Puis, après un décalage temporel, on commande le freinage des roues avant 33.

Dans cette mise en oeuvre du procédé de l'invention, l'un des groupes de roues freinées est constitué par les roues arrière 32 des deux atterrisseurs de voilure 30, tandis que l'autre groupe de roues freinées est constitué par les roues avant des deux atterrisseurs de voilure 30. Le freinage ainsi réalisé est symétrique, évitant toute déviation de la trajectoire de l'aéronef.

En pratique, le décalage temporel, de l'ordre ici de la demi-seconde, est bien inférieur, dans les situations normales d'atterrissage, au temps nécessaire pour que les roues avant 33 touchent le sol du fait de la rotation du boggie 31. De la sorte, la mise en oeuvre du procédé de l'invention n'a pas d'influence sur le fonctionnement de l'aéronef dans les situations normales d'atterrissage. Cependant, dans des situations d'atterrissage anormales où l'assiette de l'aéronef est telle que les roues arrière et avant impactent simultanément, le procédé de l'invention retrouve tout son intérêt, en évitant la superposition des efforts transitoires de freinage des roues avant et des roues arrière.

On notera que bien que, dans les situations d'atterrissage normales, la commande de freinage soit effectivement donnée avant que les roues avant 33 n'aient touché le sol, les protections anti-glissement empêcheront l'application de ladite commande avant que les roues avant 33 aient atteint une certaine vitesse de rotation.

L'invention n'est pas limitée aux modalités particulières qui viennent d'être décrites, mais bien au contraire englobe toute variante entrant dans le cadre de l'invention tel que défini par les revendications.

En particulier, bien que dans les exemples illustrés, les roues freinées soient réparties en deux groupes, on peut, tout en restant dans le cadre de l'invention, répartir les roues freinées en plus de deux groupes, les groupes de roues ainsi constitués étant freinés successivement les uns après les autres. A la limite, chaque groupe peut être constitué par une seule roue freinée.

Bien que dans les modes de mise en oeuvre illustrés, on ait indiqué que l'on freine un premier groupe de roues puis un deuxième groupe de roues, la constitution des groupes de roues n'est pas forcément immuable, mais au contraire peut varier à chaque freinage. En particulier, on pourra inverser les groupes de sorte que les roues du deuxième groupe d'un freinage antérieur deviennent les roues du premier groupe lors d'un freinage postérieur, et réciproquement. Cette permutation permet d'homogénéiser l'usure ainsi que la température entre autres paramètres des freins de chaque roue, et peut être effectuée soit de façon systématique à chaque freinage, soit en fonction de paramètres tels que la température moyenne atteinte par les freins d'un groupe de roues.

Bien que dans certains modes de mise en oeuvre illustrés, on ait indiqué que le décalage temporel a une valeur prédéterminée, ce décalage temporel pourra être calculé à chaque freinage en fonction de données telles que la masse et le centrage de l'aéronef, ou le gradient de montée de l'effort de freinage des roues du premier groupe freiné. En général, le décalage temporel ainsi calculé sera inférieur à la seconde.

Le procédé de l'invention peut être mis en oeuvre aussi bien en commandant le freinage en vue d'une application brusque de l'effort de freinage, qu'en commandant le freinage en vue d'une application progressive de celui-ci. Le procédé de l'invention peut encore être mis en oeuvre en combinant une application brusque du freinage sur l'un des groupes de roues freinées et une application progressive du freinage sur l'autre des groupes de roues freinées.

## Revendications

1. Procédé de freinage d'un aéronef comportant plusieurs roues pouvant être freinées de façon commandée, **caractérisé en ce qu**'il comporte l'étape de commander le freinage d'un premier groupe de roues (2 ;20 ;32) de l'aéronef, et, après un décalage temporel, commander le freinage d'un deuxième groupe de roues (3 ;21 ;33) de l'aéronef.

2. Procédé selon la revendication 1, appliqué à un aéronef à plusieurs atterrisseurs principaux portant les roues freinées, **caractérisé en ce que** le premier groupe de roues est constitué par l'ensemble des roues portées par un premier groupe d'atterrisseurs (20), et **en ce que** le deuxième groupe de roues est constitué par l'ensemble des roues portées par un deuxième groupe d'atterrisseurs (21).

3. Procédé selon la revendication 2, appliqué à un aéronef comportant des atterrisseurs principaux de voilure et au moins un atterrisseur principal de fuselage, **caractérisé en ce que** l'un des groupes d'atterrisseurs est constitué par les atterrisseurs de voilure (20), tandis que l'autre des groupes d'atterrisseurs est constitué par le ou les atterrisseurs de fuselage (21).

4. Procédé selon la revendication 1, **caractérisé en ce que** l'un des groupes de roues est constitué de roues portées par des atterrisseurs distincts.

5. Procédé selon la revendication 4, appliqué à un aéronef dont les roues freinées sont portées en diabolos à l'extrémité de deux atterrisseurs principaux (1), chaque diabolo comportant une roue interne (2) et une roue externe (3), **caractérisé en ce que** l'un des groupes de roues est constitué des roues externes (3) des deux atterrisseurs (1), l'autre des groupes de roues étant constitué des roues internes (2) des deux atterrisseurs (1).

6. Procédé selon la revendication 1, appliqué à un aéronef comportant un atterrisseur principal (30) à boggie (31) articulé sur l'atterrisseur et portant au moins une paire de roues avant (33) et une paire de roues arrière (32), **caractérisé en ce que** la paire de roues avant (33) et la paire de roues arrière (32) font partie de deux groupes de roues distincts.

7. Procédé selon la revendication 1, **caractérisé en ce que** le décalage temporel (Δt) est inférieur à une seconde.

## Claims

1. A method of braking an airplane having a plurality of wheels capable of being braked in controlled manner, the method being **characterized in that** it comprises the step of applying braking to a first group of wheels (2; 20; 32) of the airplane, and then after a time offset, applying braking to a second group of wheels (3; 21; 33) of the airplane.

2. A method according to claim 1, applied to an airplane having a plurality of main undercarriages carrying the braked wheels, the method being **characterized in that** the first group of wheels is constituted by all of the wheels carried by a first group of undercarriages (20), and **in that** the second group of wheels is constituted by all of the wheels carried by a second group of undercarriages (21).

3. A method according to claim 2, applied to an airplane having wing main undercarriages and at least one fuselage main undercarriage, **characterized in that** one of the groups of undercarriages is constituted by the wing undercarriages (20), while the other group of undercarriages is constituted by the fuselage undercarriage(s) (21).

4. A method according to claim 1, **characterized in that** one of the groups is constituted by wheels carried by distinct undercarriages.

5. A method according to claim 4, applied to an airplane having braked wheels carried in diabolos at the ends of two main undercarriages (1), each diabolo comprising an inner wheel (2) and an outer wheel (3), the method being **characterized in that** one of the groups of wheels is constituted by the outer wheels (3) of both undercarriages (1), and the other group of wheels is constituted by the inner wheels (2) of both undercarriages (1).

6. A method according to claim 1, applied to an airplane having a main undercarriage (30) with a bogie (31) hinged thereto and carrying at least one front pair of wheels (33) and at least one rear pair of wheels (32), the method being **characterized in that** the front pair of wheels (33) and the rear pair of wheels (32) form portions of two distinct groups of wheels.

7. A method according to claim 1, **characterized in that** the time offset (Δt) is less than one second.

## Patentansprüche

1. Verfahren zum Abbremsen eines Flugzeuges mit mehreren Rädern, die kontrolliert gebremst werden können, **gekennzeichnet durch** den Schritt der Steuerung des Abbremsens einer ersten Radgruppe (2, 20, 32) des Flugzeuges und, zeitversetzt, die Steuerung des Abbremsens einer zweiten Radgruppe (3, 21, 33) des Flugzeuges.

2. Verfahren nach Anspruch 1, für ein Flugzeug mit mehreren Hauptfahrwerken, welche die gebremsten Räder tragen, **dadurch gekennzeichnet, dass** die erste Radgruppe aus der Gesamtheit der Räder besteht, die von einer ersten Fahrwerkgruppe (20) getragen werden, und die zweite Radgruppe aus der Gesamtheit der Räder besteht, die von einer zweiten Fahrwerkgruppe (21) getragen werden.

3. Verfahren nach Anspruch 2, für ein Flugzeug mit Flügelhauptfahrwerken und mindestens einem Rumpfhauptfahrwerk, **dadurch gekennzeichnet, dass** eine Fahrwerkgruppe aus den Flügelfahrwerken (20) besteht, während die andere Fahrwerkgruppe aus dem oder den Rumpffahrwerken (21) besteht.

4. Verfahren nach Anspruch 1, **dadurch gekennzeichnet, dass** eine der Radgruppen aus Rädern besteht, die von verschiedenen Fahrwerken getragen werden.

5. Verfahren nach Anspruch 4, für ein Flugzeug, dessen gebremste Räder als Zwillingsradpaar am Ende von zwei Hauptfahrwerken (1) getragen werden, wobei jedes Paar ein Innenrad (2) und ein Außenrad (3) umfasst, **dadurch gekennzeichnet, dass** eine Radgruppe aus Außenrädern (3) der zwei Fahrwerke (1) und die andere Radgruppe aus Innenrädern (2) der zwei Fahrwerke (1) besteht.

6. Verfahren nach Anspruch 1, für ein Flugzeug, umfassend ein Hauptfahrwerk (30) mit Schwenkträger (31), der gelenkig in dem Fahrwerk gelagert ist und mindestens ein Paar Vorderräder (33) und ein Paar Hinterräder (32) trägt, **dadurch gekennzeichnet, dass** das Paar Vorderräder (33) und das Paar Hinterräder (32) zu zwei verschiedenen Radgruppen gehören.

7. Verfahren nach Anspruch 1, **dadurch gekennzeichnet, dass** der Zeitversatz (Δt) weniger als eine Sekunde beträgt.
